# EUROPEAN PATENT APPLICATION

(11) **EP 1 484 685 A1**
(43) Date of publication of application: **08.12.2004**
(21) Application number: 02702810.9
(22) Date of filing: 07.03.2002
(51) Int. Cl.: G06F 12/00, G06F 3/06, G06F 13/10, G06F 13/14

(54) **STORAGE VIRTUALIZATION SYSTEM CONVERSION MANAGEMENT APPARATUS AND STORAGE VIRTUALIZATION SYSTEM CONVERSION MANAGEMENT METHOD**

(71) Applicant: FUJITSU LIMITED, Kawasaki-shi, Kanagawa 211-8588 (JP)
(72) Inventor: SHINKAI, Yoshitake c/o FUJITSU LIMITED, Kawasaki-shi, Kanagawa 211-8588 (JP); GOTO, Masanori c/o FUJITSU LIMITED, Kawasaki-shi, Kanagawa 211-8588 (JP)
(74) Representative: Hitching, Peter Matthew
(86) International application number: PCT/JP2002/002143
(87) International publication number: WO 2003/075161

(57) **Abstract**

A conversion control unit (2) correlates real block addresses of every storage device with virtual block addresses in a virtual storage device, assigns a storage virtualization device for each virtual block address, distributes storage conversion tables (21, 22, 23) containing the assigned correlated virtualization virtual memory address and the real block address to each of the storage devices, and distributes a routing table (11) containing the correlated virtual block address and the storage virtualization device to each server. A load monitoring unit and a load distribution processing unit provided in each storage virtualization device monitors the processing load. A failure recovery processing unit detects failure of storage virtualization device, and reassigns the virtual block address assigned to an overloaded or broken down storage virtualization device to another functioning storage virtualization device.

## Description

### TECHNICAL FIELD

The present invention relates to a conversion management device and a conversion management method by which, by providing plurality of storage virtualization devices sitting between plurality of storage devices and plurality of servers that access the storage devices, virtual block addresses that the server accesses on the storage virtualization devices are converted to real block addresses of the storage devices. More particularly, the present invention relates to a storage virtualization device and a storage virtualization method which realizes a structurally simple, highly reliable, and fast storage virtualization system.

### BACKGROUND ART

The advance of information system allows even faster processing of large volumes of data. This ability translates to a requirement for a storage device that can store the even larger volumes of data. However, it can be an expensive proposition to have a single storage device with the required capacity. In this embodiment, if a single storage device is overflowing, it would necessitate migrating data on the storage device onto a larger capacity of new storage device, which disallows continuous system operation as application programs must be stopped while migrating data.

Therefore, a storage virtualization system has been used in which a virtual storage device is created using storage regions of plurality of storage devices. This storage virtualization system considerably cuts down the cost involved in capacity augmentation or storage maintenance.

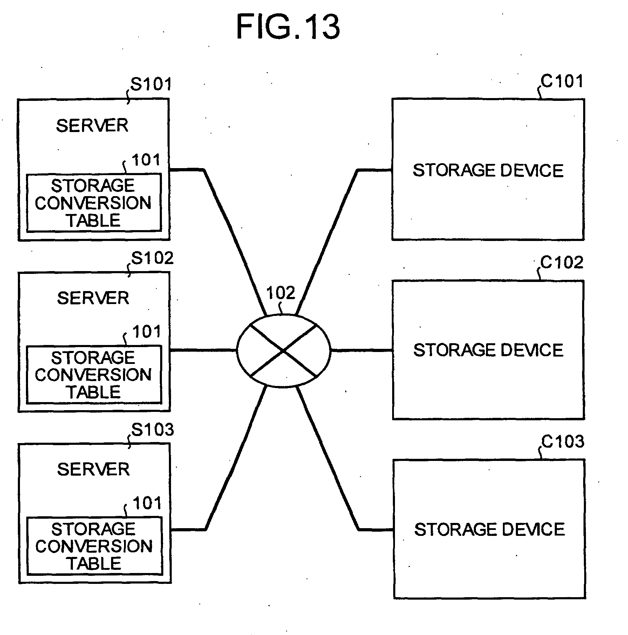

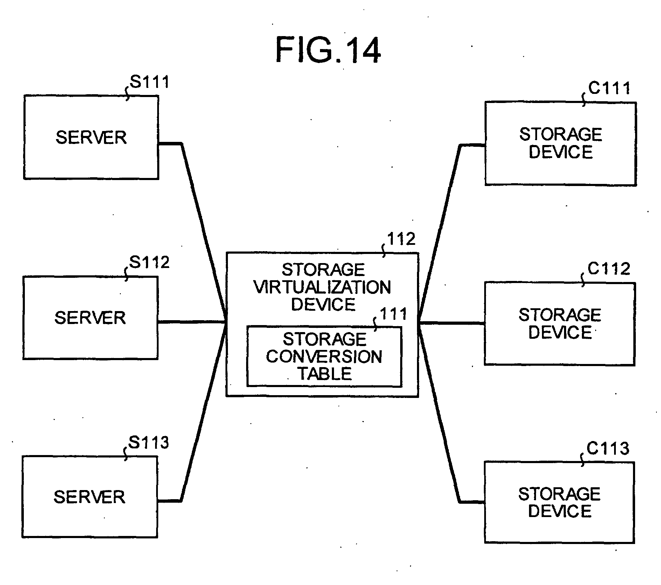

Fig. 13 and Fig. 14 are block diagrams of conventional storage virtualization systems. The storage virtualization system illustrated in Fig. 13 includes servers S101, S102, and S103 connected with storage devices C101, C102, and C103 via a storage area network (SAN) 102.

Each of the servers S101, S102, and S103 internally has a storage conversion table 101. The storage conversion table 101 is a table containing block addresses of storage regions of the respective storage devices C101, C102, and C103 and corresponding virtual block addresses of a virtual storage device. When reading data from or writing data to the virtual storage device, the servers S101, S102, and S103 convert, using the storage conversion table 101, the virtual block address to the real block address of the storage device, and reads from and writes to the corresponding storage device. The method of correlating the block addresses of the storage device and the block addresses of the virtual storage device independently of a data processing route of the storage device is called an outbound virtualization method.

The storage virtualization system illustrated in Fig. 14 includes servers S111, S112, and S113 connected to storage devices C111, C112, and C113 via a storage virtualization device 112.

The storage virtualization device 112 internally has a storage conversion table 111. The storage conversion table 111 is a table containing block addresses of storage regions of the storage devices C111, C112, and C113 and corresponding virtual block addresses of a virtual storage device. When reading from or writing to the virtual storage device, the servers S111, S112, and S113 transmits the storage virtualization device 112 a reading/writing request including the block address of the virtual storage device. The storage virtualization device 112 converts the received block address of the virtual storage device to the block address of the storage device according to the storage conversion table 111, and reads from and writes to the corresponding storage device. The method of correlating the block addresses of the storage devices and the block addresses of the virtual storage device within a data processing route of the storage device is called an inbound virtualization method.

However, it is difficult to provide a cache function in the outbound-type storage visualization system illustrated in Fig. 13. A cache function allows fast processing by temporarily storing a data from a server to a storage device and completing the process without accessing the storage device if the required information is available in the cache memory itself. It is required for the information in the cache memory to be reflected in the appropriate storage device. In the outbound storage virtualization system, where each server directly accesses the storage device, it is necessary to synchronize the cache contents of all the servers. The synchronization process makes the storage virtualization system very complex. In other words, in the conventional outbound-type storage virtualization system, fast data processing cannot be carried out due to inability to provide a cache function.

In the inbound-type storage virtualization system illustrated in Fig. 14, all the servers are connected to the storage devices through a single storage virtualization device, fast data processing can be realized by providing a cache function in the storage virtualization device. However, in the inbound-type storage virtualization system, the processing capability of the storage virtualization system is limited by the processing power of the single storage virtualization device. Further, if there is a failure of the storage virtualization device, the entire storage visualization system ceases to function. Besides, if there is a failure of a storage virtualization device in which a cache function is provided, the data in the cache memory is lost. Therefore, in a system that requires high reliability, the cache function cannot be used for write data. In other words, in the conventional inbound-type storage virtualization system, reliability is not good and the process capability depends on the storage virtualization device. Further, if the cache function is used for the write data in the conventional inbound-type storage visualization device, reliability of data is suspect.

It is an object of the present invention to solve the problems described above and to provide a conversion management device and a conversion management method for realizing a structurally simple, highly reliable, and fast storage virtualization system.

### DISCLOSURE OF THE INVENTION

To solve the problems described above and achieve the object, according to an aspect of the present invention, a conversion management device and a conversion management method of a storage virtualization system that includes a plurality of storage virtualization devices sitting between a plurality of storage devices and a plurality of servers that access the storage devices, and converts virtual block addresses accessed by the servers through the storage virtualization devices into real block addresses of each storage device, comprises a storage conversion table creating unit that creates for each storage virtualization device a storage conversion table containing in a correlated form the virtual block address and the real block address of storage devices, the storage conversion table being used by the storage virtualization devices for address conversion; and a storage conversion table distribution unit that distributes to the respective storage virtualization units the storage conversion tables created by the storage conversion table creating unit.

According to the above aspect, a storage conversion table, used for address conversion by each storage virtualization device, is created for each storage virtualization device, and a storage conversion table distribution unit distributes the storage conversion tables to the respective storage virtualization devices. Consequently, the address conversion process is distributed amongst the plural storage virtualization devices. As a result, a storage conversion device and a storage conversion device are provided by which a fast and highly reliable storage virtualization system having a simple structure is realized.

According to another aspect, the conversion management method further comprises an assigning unit that manages assignment data, the assignment data being specification of a single storage virtualization device that can access the real block addresses of each storage device. The storage conversion table creating unit creates the storage conversion table for each storage virtualization device based on the assignment data managed by the assigning unit.

According to the above aspect, a single storage device is assigned to access real block addresses of each storage device and data pertaining to this assignment is managed as assignment data. The storage conversion tables are created based on this assignment data. Consequently, a plurality of storage virtualization devices accessing the same real block address is prevented and a storage conversion device and a storage conversion method are provided by which a fast and highly reliable storage virtualization system having a simple structure is realized.

According to still another aspect, the conversion management methd further comprises a routing table creating unit that creates a routing table specifying a storage virtualization device that can access a predetermined real block address of each storage device; and a routing table distribution unit that distributes to the servers or to a predetermined plurality of storage virtualization devices the routing table created by the routing table creating unit.

According to the above aspect, a routing table is created assigning a storage virtualization device that can access a predetermined real block address of each storage device. The routing table is distributed to the servers or to a predetermined storage virtualization device, and the access from the server is routed to the assigned storage virtualization device. Consequently, the load on each storage virtualization device can be reduced, and address conversion can be performed faster with simple structure.

According to still another aspect, the conversion management device and the conversion management device further comprises a routing table creating unit that creates a routing table specifying a storage virtualization device that can access a predetermined real block address of each storage device; and a routing table distribution unit that distributes to a routing device set up between the servers and the storage virtualization devices the routing table created by the routing table creating unit.

According to the above aspect, a routing table is created assigning a storage virtualization device that can access a predetermined real block address of each storage device. The routing table is distributed to a routing device placed between the server and a plurality of storage visualization devices, and the routing device routs the access from the server to the assigned storage virtualization device. Consequently, the load on each storage virtualization device can be reduced, and a storage conversion device and a storage conversion method are provided by which a fast and highly reliable storage virtualization system having a simple structure is realized.

According to still another aspect, the conversion management device further comprises a load status data obtaining unit that obtains as load status data a processing amount in a predetermined time period from each storage virtualization device. The assigning unit updates, based on the load status data obtained by the load status data obtaining unit, the assignment data assigned to the plural storage virtualization devices.

According to the above aspect, a routing table is created assigning a storage virtualization device that can access a predetermined real block address of each storage device. The routing table is distributed to a routing device set up between the servers and the storage virtualization devices. The access from the server is routed to the assigned storage virtualization device by the routing device. Consequently, the load on each storage virtualization device can be reduced, and a storage conversion device and a storage conversion method are provided by which a fast and highly reliable storage virtualization system having a simple structure is realized.

According to still another aspect, the conversion management device further comprises an operating status data obtaining unit that obtains as operating status data information pertaining to whether of each storage visualization device is functioning or inoperative. The assigning unit updates, based on the operating status data obtained by the operating status data obtaining unit, the assignment data assigned to the plural storage virtualization devices.

According to the above aspect, operating status data pertaining to whether each storage virtualization device is functioning or inoperative is obtained, and the assignment data is updated based on the obtained operating status data. Consequently, if any storage virtualization device breaks down, the address conversion formerly assigned to the storage virtualization device that has broken down is assigned to another functioning storage virtualization device. Thus, a storage conversion device and a storage conversion method are provided by which a fast and highly reliable storage virtualization system having a simple structure is realized.

### BRIEF DESCRIPTION OF THE DRAWINGS

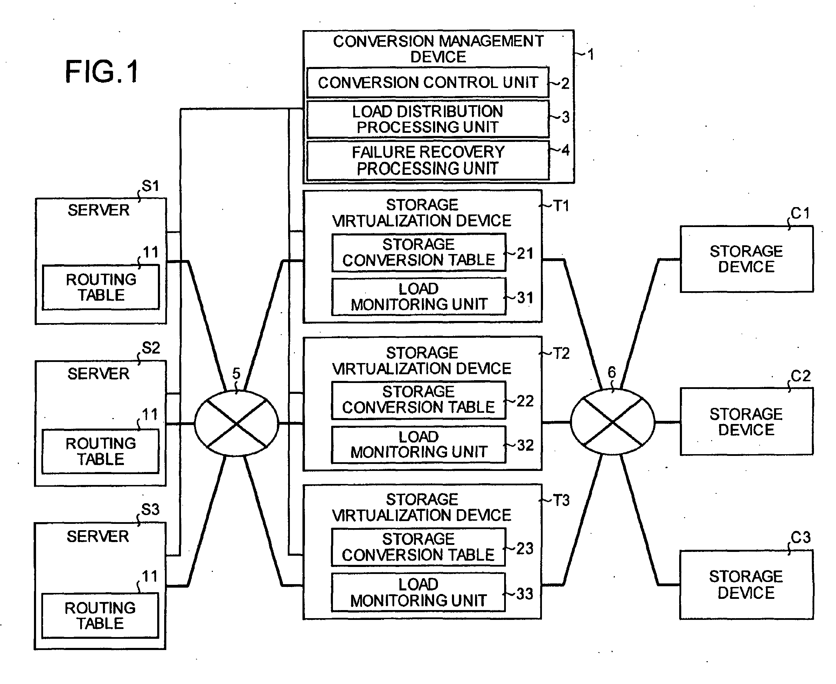

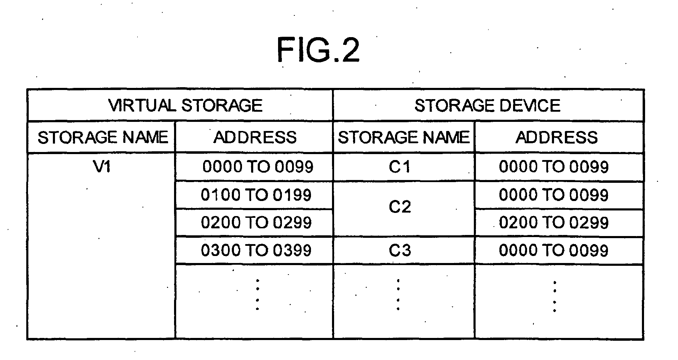

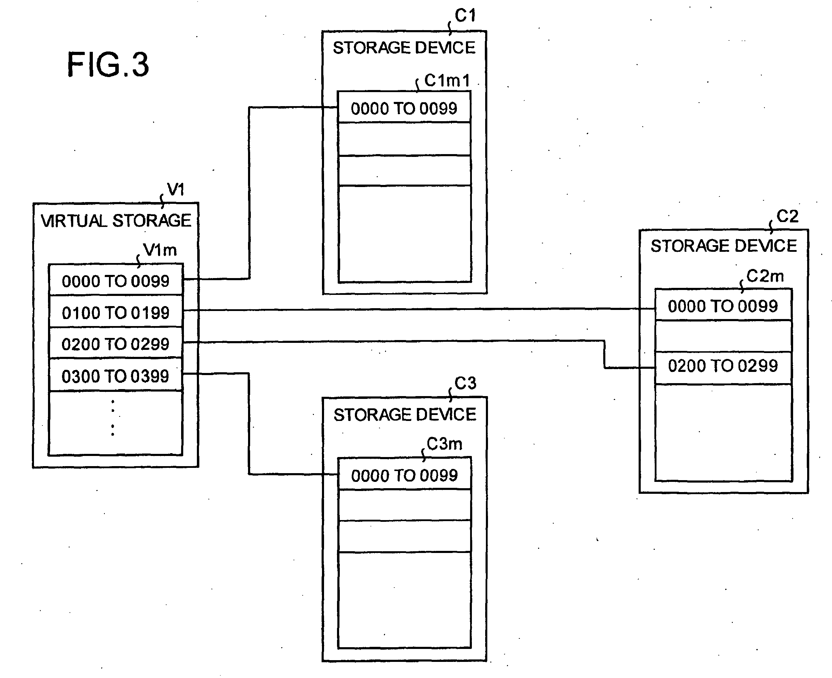

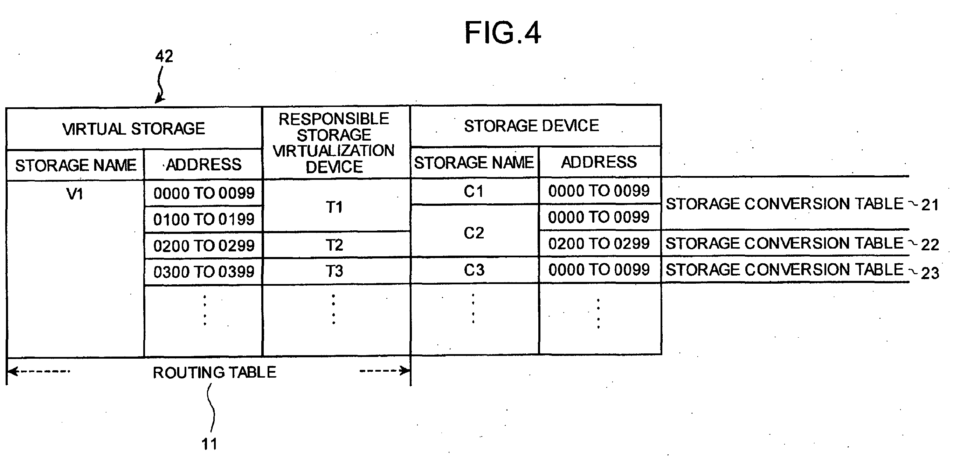

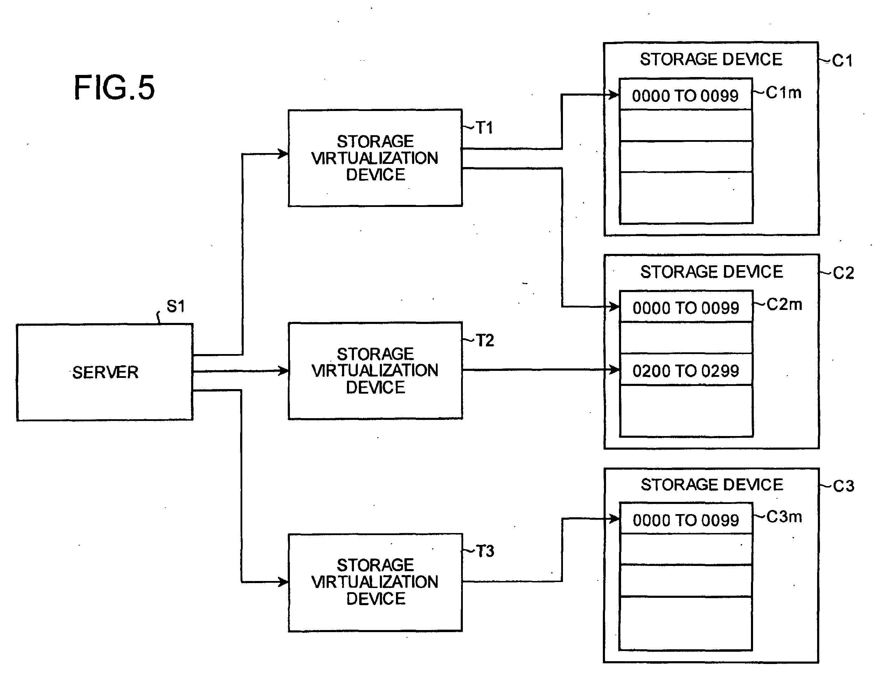

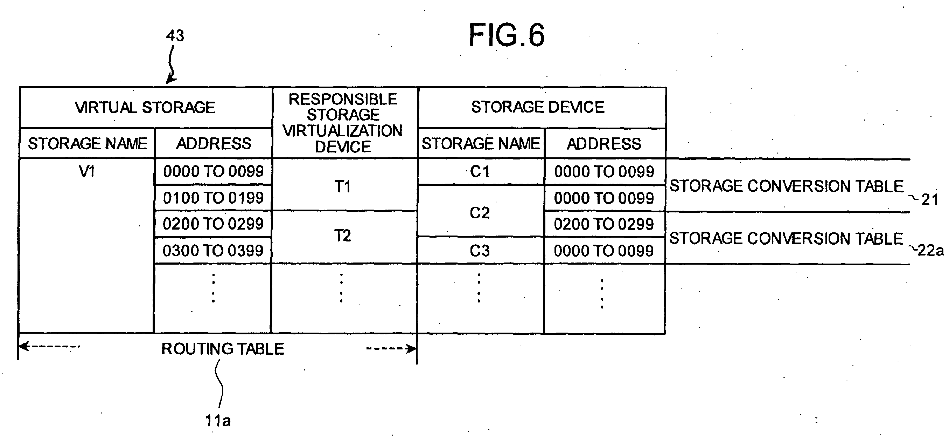

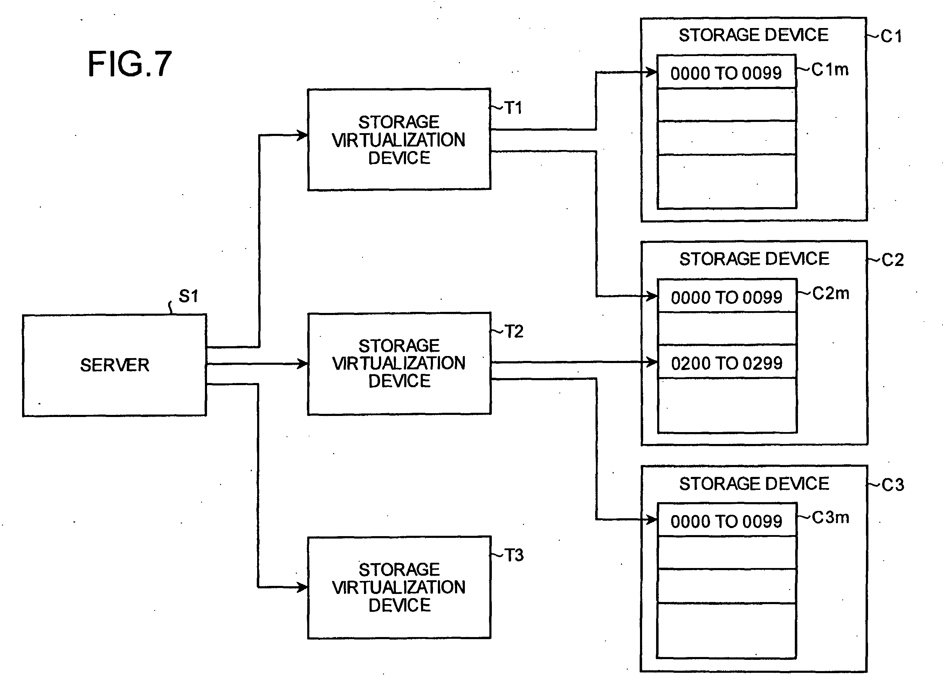

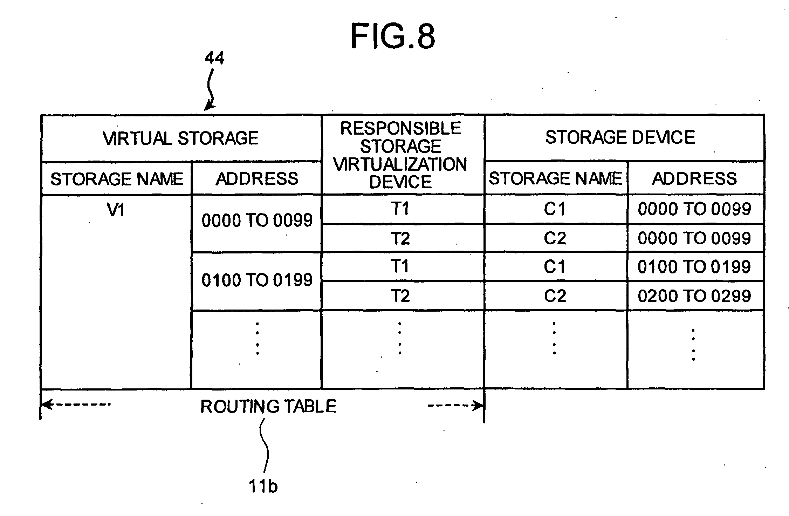

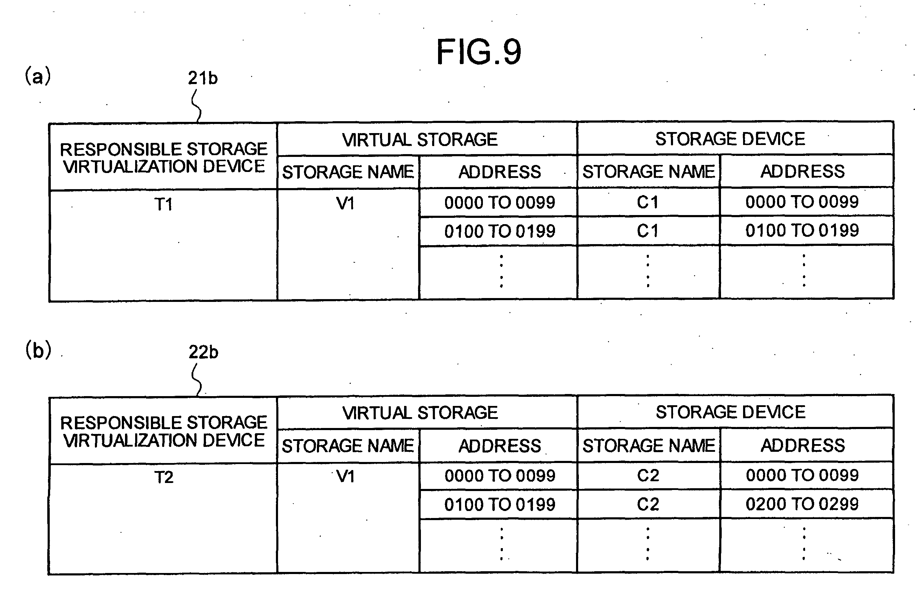

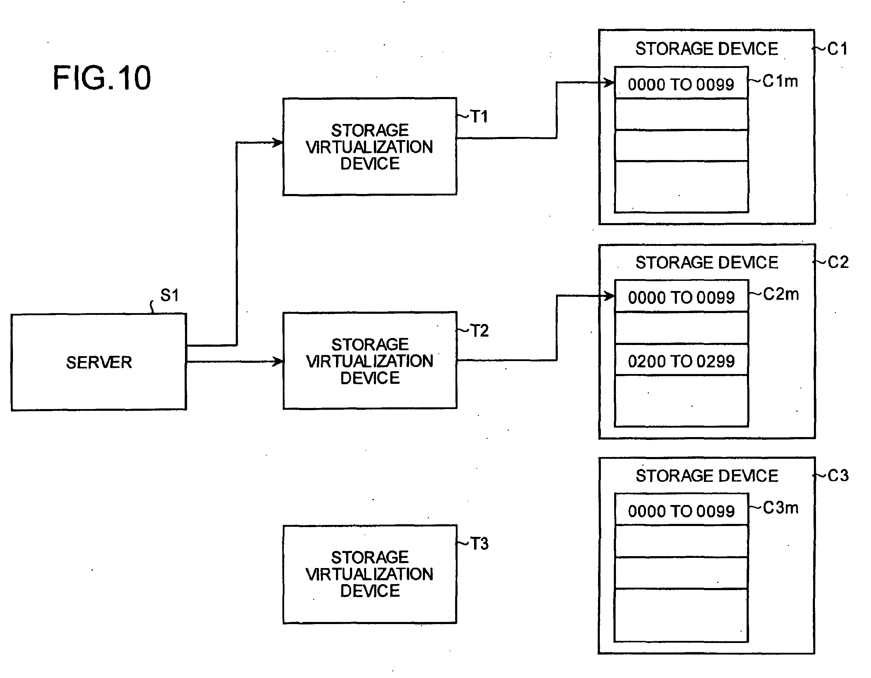

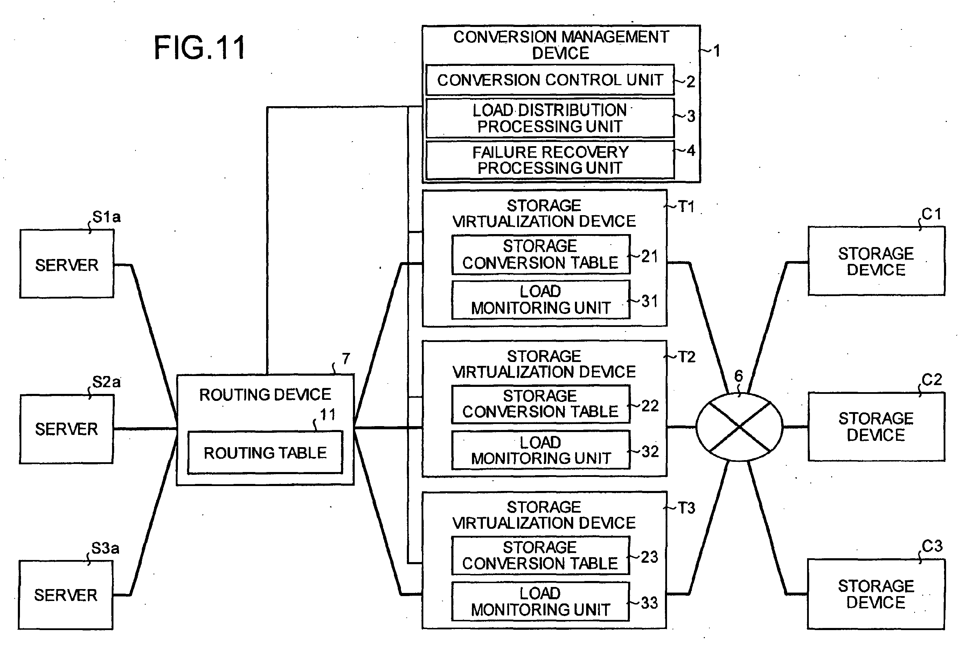

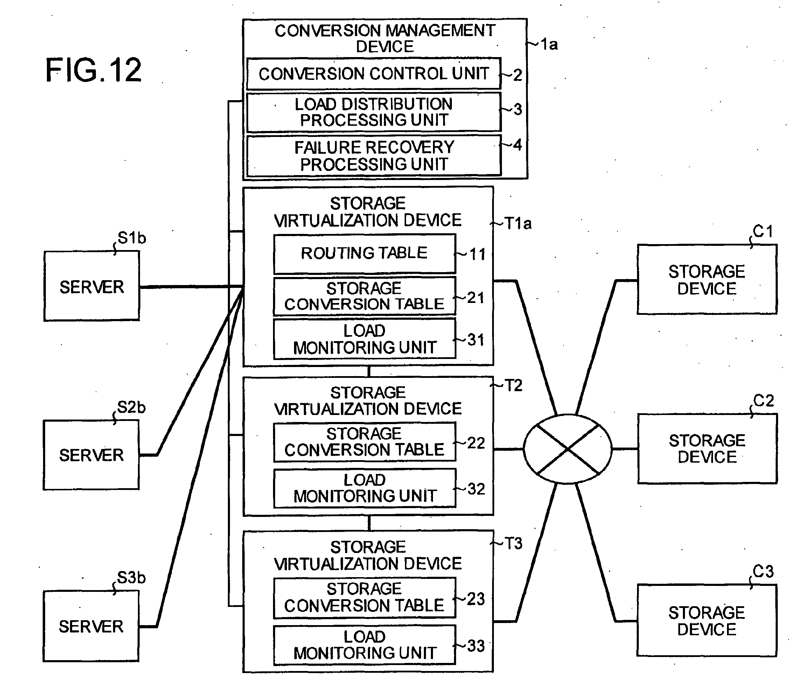

Fig. 1 is a block diagram of a storage visualization system according to an embodiment of the present invention; Fig. 2 is a drawing explaining a correlation between virtual block addresses and real block addresses; Fig. 3 is a drawing explaining a virtual storage device formed by the correlation illustrated in Fig. 2; Fig. 4 is a drawing illustrating a correlation management table of a conversion control unit; Fig. 5 is a drawing explaining a process of a server writing data to a virtual storage device; Fig. 6 is a drawing explaining a correlation management table reconstructed by a failure recovery processing unit when there is a failure in a storage virtualization device; Fig. 7 is a drawing explaining a process of a server writing data to the virtual storage device based on an updated routing table; Fig. 8 is a drawing explaining the correlation management table featuring data mirroring; Fig. 9 includes drawings for explaining the storage conversion tables extracted from the correlation management table illustrated in Fig. 8; Fig. 10 is a drawing explaining the process of the server S1 writing data while creating a mirror data; Fig. 11 is block diagram of the storage virtualization system in which an independent routing device is provided; Fig. 12 is a block diagram of the storage virtualization system in which a routing function is provided in the storage virtualization devices; Fig. 13 is a block diagram of a conventional outbound storage virtualization system; and Fig. 14 is a block diagram of a conventional inbound storage virtualization system.

### BEST MODE FOR CARRYING OUT THE INVENTION

Exemplary embodiments of the storage virtualization system and the storage virtualization method according to the present invention are explained next with reference to the accompanying drawings.

### (First Embodiment)

Fig. 1 is a block diagram of the storage virtualization system according to the first embodiment of the present invention. In the storage virtualization system according to the first embodiment, servers S1, S2, and S3 are respectively connected to storage virtualization devices T1, T2, and T3 via a storage area network (hereinafter "SAN") 5. The storage virtualization devices T1, T2, and T3 are respectively connected to storage devices C1, C2, and C3 via a SAN 6. The servers S1, S2, and S3 as well as the storage virtualization devices T1, T2, and T3 are connected to a conversion management device 1.

The conversion management device 1 includes a conversion control unit 2, a load distribution processing unit 3, and a failure recovery processing unit 4. The conversion control unit 2 specifies a correlation between block addresses of storage regions in the storage devices C1, C2, and C3 and block addresses of virtual storage regions of a virtual storage device and distributes the correlated addresses in the form of storage conversion tables 21, 22, and 23 respectively to the storage visualization devices T1, T2, and T3. The conversion control unit 2 assigns the responsibility of conversion of the block addresses to the storage virtualization devices, and distributes to the servers S1, S2, and S3 the correlation between the block addresses of the virtual storage regions and the storage virtualization devices to which the block addresses are assigned in the form of a routing table 11. A single storage device is specified to be responsible for each of the block addresses of the storage regions of the storage devices C1, C2, and C3 in the storage conversion tables 21, 22, and 23 and in the routing table 11. In other words, any specific address of the storage device is every time accessed for reading or writing, etc. by the same storage virtualization device. This does not hinder a single storage device being responsible for the block addresses of plurality of storage devices or setting up plurality of responsible storage virtualization devices for a predetermined virtual storage regions. The block address in the virtual storage regions of the virtual storage device will be referred to as "virtual block address" and the block address in the storage regions of the storage device will be referred to as "real block address" in the explanation that follows.

When reading from or writing to the virtual storage device, the servers S1, S2, and S3 send, based on the routing table 11 received from the conversion management device 1, to the responsible storage virtualization device for the virtual block addresses being accessed a write request or a read request. When there is a read request or a write request from the servers S1, S2, and S3, the storage virtualization device T1 converts the virtual block address to the real block address using the storage conversion table 21 and reads from or writes to the concerned storage device. Similarly, when there is a read request or a write request from the servers S1, S2, and S3, the storage virtualization devices T2 and T3 convert the virtual block addresses to the real block addresses using the storage conversion table 22 and 23 respectively, and read from or write to the concerned storage devices.

The storage virtualization devices T1, T2, and T3 respectively have load monitoring units 31, 32, and 33. The load monitoring unit 31 informs, as load status information, the load distribution processing unit 3, of the amount of reading and writing the storage virtualization device T1 carries out within a predetermined time. Similarly, the load monitoring units 32 and 33 send, as load status information, to the load distribution processing unit 3, the amount of reading and writing the storage virtualization devices T2 and T3 carry out within a predetermined time.

The load distribution processing unit 3 compares the load status of the storage virtualization devices T1, T2, and T3 based on the load status information received from the load monitoring units 31, 32, and 33. If any of the storage visualization devices T1, T2, and T3 is found to be overloaded, the load distribution processing unit 3 recalculates the storage conversion table and the routing table averaging out the loads of the storage virtualization device T1, T2, and T3, and outputs the recalculated storage conversion table and the routing table to the conversion control unit 2.

The failure recovery processing unit 4 of the conversion management device 1 monitors whether the storage virtualization devices T1, T2, and T3 are functioning or not. If a storage virtualization device is inoperative for some reason, the failure recovery processing unit 4 recalculates the storage conversion table and the routing table assigning to the functioning storage virtualization devices the virtual blocks which belonged to the failed storage virtualization device, and passes the result to the conversion control unit 2.

The conversion control unit 2 updates the conversion tables 21, 22, and 23 and the routing table 11 based on the storage conversion table and the routing table calculated by the load distribution processing unit 3 and the failure recovery processing unit distributes the updated routing tables 11 and storage conversion tables 21, 22, and 23 to the servers S1, S2, and S3, and the storage virtualization devices T1, T2, and T3 respectively. In other words, if any of the storage virtualization devices T1, T2, and T3 is overloaded or is inoperative, the conversion management device 1 redistributes the load or reassigns to other operative storage virtualization devices the block addresses assigned to the inoperative or overloaded storage virtualization device. Consequently, even if a portion of the storage virtualization device fails, the entire virtual storage regions of the virtual storage device can still be accessed for reading and writing. Further, each storage virtualization device receives only data assigned to it. Due to this process distribution, scalable and reliable processing can be realized. Besides, since the particular storage regions of the virtual storage devices is assigned to a single storage virtualization device, even if a cache function is provided in a storage virtualization devices, the need for synchronizing the cache function between the storage virtualization devices is obviated. Consequently, the processing speed can be further enhanced by augmenting capacity by proving a cache in all the storage virtualization devices.

The correlation between virtual block address and the real block address and the storage regions is explained by way of an example. Fig. 2 is a drawing explaining the correlation between the virtual block addresses and the real block addresses. Fig. 3 is a drawing explaining the virtual storage device formed by the correlation illustrated in Fig. 2. In Fig. 2, the real block address "0000 to 0099" of the storage device C1 is depicted as the virtual block address "0000 to 0099" of the virtual storage device V1. Similarly, the real block address "0000 to 0099" of the storage device C2 is depicted as the virtual block address "0100 to 0199" of the virtual storage device V1, and the real block address "0200 to 0299" of the storage device C2 is depicted as the virtual block address "0200 to 0299" of the virtual storage device V1. The real block address "0000 to 0099" of the storage device C3 is depicted as the virtual block address "0300 to 0399" of the virtual storage device V1.

In other words, in this storage virtualization system, when accessing a virtual storage regions V1m of the virtual storage device V1, storage regions C1m, C2m, and C3m of the storage devices C1, C2, and C3, respectively, are actually being accessed. To be more specific, when the virtual block address "0000 to 0099" of the virtual storage regions V1m is accessed, the real block address "0000 to 0099" of the storage regions C1 m of the storage device C1 is actually being accessed. Similarly, when the virtual block address "0100 to 0199" of the virtual storage regions V1m is accessed, the real block address "0000 to 0099" of the storage regions C2m of the storage device C2 is actually being accessed. In the same way, when the virtual block address "0200 to 0299" of the virtual storage regions V1m is accessed, the real block address "0200 to 0299" of the storage regions C2m of the storage device C2 is actually being accessed. And, when the virtual block address "0300 to 0399" of the virtual storage regions V1m is accessed, the real block address "0000 to 0099" of the storage regions C3m of the storage device C3 is actually being accessed.

The conversion control unit 2 includes a correlation management table that manages the routing table 11 and the storage conversion table 21. The correlation management table contains in a correlated manner the virtual block addresses of the virtual storage device V1, the responsible storage virtualization devices, and the real block addresses of the storage devices. Fig. 4 is a drawing of a correlation management table 42 of the conversion control unit 2. In Fig. 4, the virtual block address "0000 to 0099" of the virtual storage device V1 is assigned to the storage virtualization device T1 and is correlated with the real block address "0000 to 0099" of the storage device C1. The virtual block address "0100 to 0199" of the virtual storage device V1 is assigned to the storage virtualization device T1 and is correlated with the real block address "0000 to 0099" of the storage device C2. Similarly, the virtual block address "0200 to 0299" of the virtual storage device V1 is assigned to the storage virtualization device T2 and is correlated with the real block address "0200 to 0299" of the storage device C2. And, the virtual block address "0300 to 0399" of the virtual storage device V1 is assigned to the storage virtualization device T3 and is correlated with the real block address "0000 to 0099" of the storage device C3. When defining the converstion management table 42, the user may specify only the requirements of "virtual storage devices" or may specify everything. When "the requirement of virtual storage devices" is specified, a conversion management table satisfying this requirement is automatically calculated.

The conversion control unit 2 extracts from the correlation management table 42 the correlated virtual block address of the virtual storage device V1 and the responsible storage virtualization device as the routing table 11, and distributes the extracted routing table 11 to the servers S1, S2, and S3. The conversion control unit 2 also extracts from the correlation management table 42 the virtual block address assigned to the storage virtualization device T1 and its corresponding real block address, and sends it as the storage conversion table 21 to the storage virtualization device T1. In other words, with reference to Fig. 4, the conversion control unit 2 correlates the virtual block address "0000 to 0099" of the virtual storage device V1 with the real block address "0000 to 0099" of the storage device C1, and the virtual block address "0100 to 0199" of the virtual storage device V1 with the real block address "0099 to 0199" of the storage device C2, and sends the correlated addresses as the storage conversion table 21 to the storage virtualization device T1. Similarly, the conversion control unit 2 extracts from the correlation management table 42 the virtual block address assigned to the storage virtualization device T2 and its corresponding real block address, and sends it as the storage conversion table 22 to the storage virtualization device T2. In other words, with reference to Fig. 4, the conversion control unit 2 correlates the virtual block address "0200 to 0299" of the virtual storage device V1 with the real block address "0200 to 0299" of the storage device C2, and sends the correlated addresses as the storage conversion table 22 to the storage virtualization device T2. In the same way, the conversion control unit 2 extracts from the correlation management table 42 the virtual block address assigned to the storage virtualization device T3 and its corresponding real block address, and sends it as the storage conversion table 23 to the storage virtualization device T3. In other words, with reference to Fig. 4, the conversion control unit 2 correlates the virtual block address "0300 to 0399" of the virtual storage device V1 with the real block address "0000 to 0099" of the storage device C3, and sends the correlated addresses as the storage conversion table 23 to the storage virtualization device T3.

A process of the storage conversion system when the server S1 reads data from or writes data to the virtual storage device V1 is explained next with reference to Fig. 5. Fig. 5 is a drawing explaining a process of the server S1 writing data to the virtual storage device. When writing to the virtual block address "0000 to 0099" of the virtual storage, the server S1 specifies the virtual block address "0000 to 0099", and sends a write request and the data to be written to the storage virtualization device T1. Based on the virtual block address "0000 to 0099", the storage virtualization device T1 writes the received data to the real block address "0000 to 0099" of the storage device C1.

When writing to the virtual block address "0100 to 0199" of the virtual storage device V1, the server S1 specifies the virtual block address "0100 to 0199", and sends a write request and the data to be written to the storage virtualization device T1. Based on the virtual block address "0100 to 0199", the storage virtualization device T1 writes the received data to the real block address "0000 to 0999" of the storage device C2. Similarly, for writing to the virtual block address "0200 to 0299" of the virtual storage device V1, the server S1 specifies the virtual block address "0200 to 0299", and sends the write request and the data to be written to the storage virtualization device T2. Based on the virtual block address "0200 to 0299", the storage virtualization device T2 writes the received data to the real block address "0200 to 0299" in the storage regions C2m of the storage device C2. For writing to the virtual block address "0300 to 0399", the server S1 specifies the virtual block address "0300 to 0399", and sends the write request and the data to be written to the storage virtualization device T3. Based on the virtual block address "0300 to 0399", the storage virtualization device T3 writes the received data to the real block address "0000 to 0099" of the storage device C3.

A failure recovery process of the storage virtualization system is explained next. If any of the storage virtualization devices T1, T2, and T3 stops due to a breakdown, the failure recovery processing unit 4 calculates a new correlation management table in which the virtual block addresses that are managed by the inoperative storage virtualization device are assigned to one of the other operative storage virtualization devices. For instance, if the storage virtualization device T3 fails, the failure recovery processing unit 4 reassigns the virtual block address formerly assigned to the storage virtualization device T3 to either the storage virtualization device T1 or the storage virtualization device T2. Fig. 6 is a drawing explaining a conversion management table calculated by the failure recovery processing unit 4 when there is a failure in the storage virtualization device T3. As shown in Fig. 6, the virtual block address "0000 to 0099" of the virtual storage device V1 is assigned to the storage virtualization device T1, and is correlated with the real block address "0000 to 0099" of the storage device C1. The virtual block address "0100 to 0199" of the virtual storage device V1 is assigned to the storage virtualization device T1, and is correlated with the real block address "0000 to 0099" of the storage device C2. Similarly, the virtual block address "0200 to 0299" of the virtual storage device V1 is assigned to the storage virtualization device T2, and is correlated with the real block address "0200 to 0299" of the storage device C2. The virtual block address "0300 to 0399" of the virtual storage device V1 is assigned to the storage virtualization device T2, and is correlated with the real block address "0000 to 0099" of the storage device C3.

In other words, in the conversion management table 43, the storage virtualization device T2 is responsible for the conversion of the virtual address "0300 to 0399" to the real address "0000 to 0099" of the storage device C3. That is, the conversion which was assigned to the storage virtualization device T3 in the correlation management table 42 is now assigned to the storage virtualization device T2. The conversion control unit 2 extracts a new storage conversion table 22a based on the conversion management table 43 and sends the new storage conversion table 22a to the storage virtualization device T2. To be more specific, the storage conversion table 22a specifies a correlation between the virtual block address "0200 to 0299" of the virtual storage device V1 and the real block address "0200 to 0299" of the storage device C2, and the virtual block address "0300 to 0399" of the virtual storage device V1 and the real block address "0000 to 0099" of the storage device C3. Since, the correlation between the virtual block addresses assigned to the storage virtualization device T1 and the real block addresses is the same as shown in Fig. 4, the storage conversion table 21 remains unchanged. While the updated storage conversion table 22a is sent to the storage visualization device T2, no table is sent to the storage virtualization device T1. The conversion control unit 2 distributes an updated routing table 11a to the servers S1, S2, and S3, based on the conversion management table 43.

The process of reading data from or writing data to the virtual storage device by the server S1 based on the updated routing table 11a is explained next with reference to Fig. 7. Fig. 7 is a drawing explaining a process of the server S1 writing data to the virtual storage device based on the routing table 11 a. The processes for the virtual block addresses "0000 to 0099", "0100 to 0199", and "0200 to 0299" are the same as explained with reference to Fig. 5 and hence are not explained here. For writing to the virtual block address "0300 to 0399", the server S1 specifies the virtual block address "0300 to 0399", and sends a write request and the data to be written to the storage virtualization device T2. Based on the virtual block address "0300 to 0399", the storage virtualization device T2 writes the received data to the real block address "0000 to 0099" of the storage device C3.

Thus, when a storage virtualization device breaks down, the failure recovery processing unit 4 detects the failure and assigns the block addresses assigned to the inoperative storage virtualization device to a functioning storage virtualization device. Consequently, the servers S1, S2, and S3 can continue to access the entire virtual storage regions of the virtual storage device, irrespective of the operational status of the storage virtualization devices. As a result, the inoperative storage virtualization device can be repaired or replaced without having to shut down the storage virtualization system.

The failure recovery processing unit 4 may confirm the operational status of the storage virtualization devices by polling in which signals are issued to each of the storage virtualization devices and if any storage virtualization device fails to respond to the issued signal it is assessed to be inoperative. Alternatively, each storage device may be provided with a mechanism that issues a signal periodically to confirm the operational status. When the routing table and the storage conversion table are updated, the conversion control unit 2 may either send the updated routing table and storage conversion table to the servers and the concerned storage virtualization devices, or the conversion control unit 2 may send an instruction to the servers and the concerned storage virtualization devices to destroy the old routing table and storage conversion table. In the construction in which the old routing table is destroyed, the server should be made confirm the routing table when accessing the virtual storage device, and if the required address is not present, should be made get the updated routing table from the conversion control unit 2. Similarly, in the construction in which the old storage conversion table is destroyed, each storage virtualization device should be made to confirm the storage conversion table indicated by the virtual block address, and if the required address is not present, should be made get the updated storage conversion table from the conversion control unit 2.

In the explanation so far, a one-to-one correlation is established between the virtual block addresses in the virtual storage regions of the virtual storage device V1 and the real block addresses in the real storage regions of the storage devices C1, C2, and C3. However, plural real block addresses may be correlated with a virtual block address of the virtual storage device V1. By correlating plural real block addresses to one virtual block address, mirroring of data stored in the virtual storage device V1 can be created. Fig. 8 is a drawing explaining a conversion management table 44 showing data mirroring. Fig. 9 includes drawings explaining the storage conversion tables extracted from the correlation relation table 44 illustrated in Fig. 8. In Fig. 8, the virtual block address "0000 to 0099" of the virtual storage device V1 is correlated with two real block addresses, namely the real block address "0000 to 0099" of the storage device C1, and the real block address "0000 to 0099" of the storage device C2. The virtual block address "0100 to 0199" of the virtual storage device V1 is correlated with two real block addresses, namely, the real block address "0100 to 0199" of the storage device C1 and the real block address "0200 to 0299" of the storage device C2.

The correlation between the virtual block address "0000 to 0099" and the real block address "0000 to 0099" of the storage device C1, and between the virtual block address "0100 to 0199" and the real block address "0100 to 0199" of the storage device C1 is assigned to the storage virtualization device T1. Similarly, the correlation between the virtual block address "0000 to 0099" and the real block address "0000 to 0099" of the storage device C2, and between the virtual block address "0100 to 0199" and the real block address "0200 to 0299" of the storage device C2 is assigned to the storage virtualization device T2. Accordingly, the conversion control unit 2 distributes to the servers S1, S2, S3 a routing table 11b in which a single block address of the virtual storage device V1 is assigned to plural storage virtualization devices. The conversion control unit 2 sends to the storage virtualization device T1, based on the conversion management table 44, a storage conversion table 21b in which the memory addresses assigned to the storage virtualization device T1 and their corresponding real block addresses are correlated. The conversion control unit 2 sends to the storage virtualization device T2, based on the conversion management table 44, a storage conversion table 22b in which the virtual block addresses assigned to the storage virtualization device T2 and their corresponding real block addresses are correlated.

A process of the server S1 writing data while creating a mirror data is explained next with reference to Fig. 10. Fig. 10-is a drawing explaining the process of the server S1 writing data while creating a mirror data. For writing data to the virtual block address "0000 to 0099", the server S1 specifies the virtual block address "0000 to 0099", and sends a write request and the data to be written to the storage virtualization devices T1 and T2. Based on the virtual block address "0000 to 0099", the storage Virtualization device T1 writes the received data to the real block address "0000 to 0099" of the storage device C1. Based on the virtual block address "0000 to 0099", the storage virtualization device T2 writes the received data to the real block address "0000 to 0099" of the storage device C2.

In other words, in the correlation relation table 44, each of the virtual block addresses in the virtual storage device is assigned to two storage virtualization devices, namely T1 and T2. Therefore, the storage virtualization devices T1 and T2 write the received data to the real block addresses of different storage devices. Thus, as shown in Fig. 10, the data written to the virtual storage regions of the virtual storage device V1 is written to plural storage regions among the storage devices C1 and C2, thus creating mirror data.

To sum up, in the first embodiment of the present invention, the block addresses of the storage devices C1, C2, and C3 are assigned storage virtualization devices responsible for the conversion of the virtual block addresses to the real block addresses. The processes are distributed between the storage virtualization devices T1, T2, and T3 by providing the servers S1, S2, and S3 with the routing table 11. Consequently, data processing in the storage virtualization system can be speeded up.

Further, by providing the load monitoring units 31, 32, and 33 in the storage virtualization devices T1, T2, and T3, the data processing load of the storage virtualization devices can be monitored, and load of the storage virtualization devices are adjusted by the load distribution processing unit 2 of the conversion management device 1 in such a way that the load is averaged out between the storage virtualization devices. Consequently, overloading of the storage virtualization devices T1, T2, T3 is automatically prevented.

By providing the failure recovery processing unit in the conversion management device 1, the operational status of the storage virtualization device T1, T2, and T3 is monitored, and the storage regions formerly assigned to a failed storage virtualization device is reassigned to an operative storage virtualization device. Thus, even if a storage virtualization device is not working, the mirroring continues with the substituted storage virtualization device, and the entire virtual storage regions of the virtual storage device can still be accessed.

The conversion management device 1, comprising the conversion control unit 2, the load distribution processing unit 3, and the failure recovery processing unit 4, is provided as an independent entity in the first embodiment of the present invention. However, the conversion control unit 2, the load distribution processing unit 3, and the failure recovery processing unit 4 may be provided as programs in any of the servers S1, S2, and S3 or any of the storage virtualization devices T1, T2, and T3.

### (Second Embodiment)

In the first embodiment, a routing table is distributed to the servers S1, S2, and S3, and based on the routing table, the storage virtualization device to which the read request or write request is to be sent is determined. However, a routing function which uses the routing table need not necessarily be provided in the servers. In a second embodiment of the present invention, the storage virtualization system includes a routing device that has the routing function, provided independent from the server.

Fig. 11 is a block diagram of the storage virtualization system in which an independent routing device is provided. A routing table 11 is stored in a routing device 7 in the storage virtualization system illustrated in Fig. 11. Accordingly, a conversion management device 1 sends the routing table 11 to the routing device 7. Servers S1a, S2a, and S3a are connected to the routing device 7. When accessing a virtual storage device, the servers S1a, S2a, and S3a specify a virtual block address of the virtual storage device and send a read request or a write request to the routing device.

The routing device 7 sends, based on the routing table 11, the received read request or write request to the storage virtualization device to which the specified virtual block address is assigned. Upon receiving the read request or write request from the routing device 7, each of the storage virtualization devices T1, T2, and T3 converts the virtual block address to a real block address using storage conversion tables 21, 22, and 23, and reads from or writes to the relevant storage device. The rest of the structure and function of the second embodiment is identical to the first embodiment and thus is not explained here. The structural elements in the second embodiment that are identical to those in the first embodiment are assigned the same reference numerals.

The servers S1a, S2a, and S3a according to the second embodiment do not need to maintain the routing table 11 and do not need to determine the responsible storage virtualization device from the virtual block address. Thus, the conversion management device 1 needs to send the storage conversion table 11 only to the routing device 7 and not to the servers S1a, S2a, and S3a. In other words, the structures and processes of the servers S1a, S2a, and S3a, as well as the conversion management device 1 are simplified in the storage virtualization system according to the second embodiment of the present system.

### (Third Embodiment)

A routing function is provided in a storage visualization device in the storage virtualization system according to a third embodiment of the present invention. Fig. 12 is a block diagram of the storage virtualization system in which the routing function is provided in the storage virtualization device. A storage visualization device T1a maintains a routing table 11 in the storage virtualization system illustrated in Fig. 12. Accordingly, a conversion control device 1 sends the routing table 11 to the storage virtualization device T1a. Servers S1b, S2b, and S3b are connected to the storage virtualization device T1a. When accessing a virtual storage device, the servers S1b, S2b, and S3b specify a virtual block address of the virtual storage device and send a read request or a write request to the storage virtualization device T1a.

The storage virtualization device T1a compares the received virtual block address and the routing table 11. If the received virtual block address is assigned to itself, that is, if the storage virtualization device T1a itself is assigned the received virtual block address, the storage virtualization device T1a converts the virtual block address to an real block address using a storage conversion table 21, and reads from or writes to the relevant storage device. If the received block address is assigned to the storage virtualization device T2 or the storage virtualization device T3, the storage virtualization device T1a sends the read request or write request to the relevant storage virtualization device.

Upon receiving the read request or the write request from the storage virtualization device T1a, the storage virtualization devices T2 and T3, convert the virtual block address to the real block address using storage conversion tables 22 and 23, respectively, and read from or write to the relevant storage device. The rest of the structure and function of the third embodiment is identical to the first embodiment and thus is not explained here. The structural elements in the third embodiment that are identical to those in the first embodiment are assigned the same reference numerals.

The servers S1b, S2b, and S3b according to the third embodiment do not need to maintain the routing table 11 and do not need to determine the responsible storage virtualization device from the virtual block address. Thus, the conversion management device 1 needs to send the storage conversion table 11 only to the storage virtualization device T1a and not to the servers S1a, S2a, and S3a. In other words, the structures and processes of the servers S1b, S2b, and S3b, as well as the conversion management device 1a are simplified in the storage virtualization system according to the third embodiment of the present system.

A single routing table 11 is provided in a single storage virtualization device in Fig. 12. However, it is also possible to provide the same routing table in plural storage virtualization devices. The servers may be connected to any of the storage virtualization devices having the routing table. The distribution of the routing load and availability can be improved in this manner. For instance, by connecting a server to two storage virtualization devices, in the event of failure of one storage virtualization device, continued access can be ensured via the other operational storage virtualization.

Thus, according to the present invention, a storage conversion table, used for address conversion by each storage virtualization device, is created for each storage virtualization device, and a storage conversion table distribution unit distributes the storage conversion tables to the respective storage virtualization devices. Consequently, the address conversion process is distributed amongst the plural storage virtualization devices. As a result, a storage conversion device and a storage conversion method are provided by which a fast and highly reliable storage virtualization system having a simple structure is realized.

According to the present invention, a single unique virtual storage device is assigned to a real storage region of each storage device and data pertaining to this assignment is managed as assignment data. The storage conversion tables are created based on this assignment data. Consequently, a plurality of storage virtualization devices accessing the same real storage regions is prevented and a storage conversion device and a storage conversion method are provided by which a fast and highly reliable storage virtualization system having a simple structure is realized.

According to the present invention, a routing table is created for assigning a storage virtualization device that can access a predetermined real storage regions of each storage device. The routing table is distributed to the servers or to a predetermined storage virtualization device, and the access from the server is routed to the assigned storage virtualization device. Consequently, the load on each storage virtualization device can be reduced, and a storage conversion device and a storage conversion method are provided by which a fast and highly reliable storage virtualization system having a simple structure is realized.

According to the present invention, a routing table is created assigning a storage virtualization device that can access a predetermined real storage region of each storage device. The routing table is distributed to a routing device set up between the servers and the storage virtualization devices. The access from the server is routed to the assigned storage virtualization device by the routing device. Consequently, the load on each storage virtualization device can be reduced, and a storage conversion device and a storage conversion method are provided by which a fast and highly reliable storage virtualization system having a simple structure is realized.

According to the present invention, a processing amount of each storage virtualization device in a predetermined time period is obtained as load status data, and the assignment data is updated based on the obtained load status. Consequently, overloading of any one storage virtualization device is prevented and a storage conversion device and a storage conversion method are provided by which a fast and highly reliable storage virtualization system having a simple structure is realized.

According to the present invention, operating status data pertaining to whether each storage visualization device is functioning or inoperative is obtained, and the assignment data is updated based on the obtained operating status data. Consequently, if any storage virtualization device breaks down, the address conversion formerly performed by the storage virtualization device that has broken down is assigned to another operative storage virtualization device. Thus, a storage conversion device and a storage conversion method are provided by which a fast and highly reliable storage virtualization system having a simple structure is realized.

### INDUSTRIAL APPLICABILITY

The conversion management device and the conversion management method of the storage virtualization system according to the present invention are useful in improving the processing capacity and reliability of the storage virtualization system.

## Claims

1. A conversion management device of a storage virtualization system that includes a plurality of storage virtualization devices connected between a plurality of storage devices and a plurality of servers that access the storage devices, and converts virtual memory addresses accessed by the servers through the storage virtualization devices into real memory addresses of each storage device, comprising:
a storage conversion table creating unit that creates for each storage visualization device a storage conversion table containing in a correlated form the virtual memory address and the actual memory address, the storage conversion table being used by the storage virtualization devices for address conversion; and
a storage conversion table distribution unit that distributes to the respective storage virtualization units the storage conversion table created by the storage conversion table creating unit.

2. The conversion management device of the storage virtualization system according to claim 1, further comprising an assigning unit that manages assignment data, the assignment data being specification of a single storage virtualization device that can access the actual memory addresses of each storage device,
wherein the storage conversion table creating unit creates the storage conversion table for each storage virtualization device based on the assignment data managed by the assigning unit.

3. The conversion management device of the storage virtualization system according to claim 2, further comprising a load status data obtaining unit that obtains as load status data a processing amount in a predetermined time period from each storage virtualization device,
wherein, the assigning unit updates, based on the load status data obtained by the load status data obtaining unit, the assignment data assigned to the storage virtualization devices.

4. The conversion management device of the storage virtualization system according to claim 2, further comprising an operating condition data obtaining unit that obtains as operating condition data information pertaining to whether of each storage virtualization device is functioning or inoperative,
wherein, the assigning unit updates, based on the operating condition data obtained by the operating condition data obtaining unit, the assignment data assigned to the storage virtualization devices.

5. The conversion management device of the storage virtualization system according to claim 2, further comprising:
a load status data obtaining unit that obtains as load status data a processing amount in a predetermined time period from each storage virtualization device; and
an operating condition data obtaining unit that obtains as operating condition data information pertaining to whether of each storage virtualization device is functioning or inoperative,
wherein, the assigning unit updates, based on the operating condition data obtained by the operating condition data obtaining unit, the assignment data assigned to the storage virtualization devices.

6. The conversion management device of the storage virtualization system according to any one of claims 1 to 5, further comprising:
a routing table creating unit that creates a routing table specifying a storage virtualization device that can access a predetermined actual memory address of each storage device; and
a routing table distribution unit that distributes to the servers or to predetermined storage virtualization devices the routing table created by the routing table creating unit.

7. The conversion management device of the storage visualization system according to any one of claims 1 to 5, further comprising:
a routing table creating unit that creates a routing table specifying a storage visualization device that can access a predetermined actual memory address of each storage device; and
a routing table distribution unit that distributes to a routing device connected between the server and the storage virtualization devices the routing table created by the routing table creating unit.

8. A conversion management method of a storage virtualization system that includes a plurality of storage virtualization devices connected between a plurality of storage devices and a plurality of servers that access the storage devices, and converts virtual memory addresses accessed by the servers through the storage virtualization devices into real memory addresses of each storage device, comprising:
creating for each storage virtualization device a storage conversion table containing in a correlated form the virtual memory address and the actual memory address, the storage conversion table being used by the storage virtualization devices for address conversion; and
distribution the storage conversion tables created at the creating to the respective storage virtualization units.

9. The conversion management method of the storage virtualization system according to claim 8, further comprising managing assignment data, the assignment data being specification of a single storage virtualization device that can access the actual memory addresses of each storage device,
wherein the creating includes creating the storage conversion table for each storage virtualization device based on the assignment data managed.

10. The conversion management method of the storage virtualization system according to claim 9, further comprising obtaining, as load status data, a processing amount in a predetermined time period from each storage virtualization device,
wherein, the managing includes updating, based on the load status data obtained at the obtaining, the assignment data assigned to the plural storage virtualization devices.

11. The conversion management method of the storage virtualization system according to claim 9, further comprising obtaining, as operating condition data, information pertaining to whether of each storage virtualization device is functioning or inoperative,
wherein, the managing includes updating, based on the operating condition data obtained in the obtaining, the assignment data assigned to the plural storage visualization devices.

12. The conversion management method of the storage virtualization, system according to claim 9, further comprising:
obtaining, as load status data, a processing amount in a predetermined time period from each storage virtualization device; and
obtaining, as operating condition data, information pertaining to whether of each storage visualization device is functioning or inoperative,
wherein, the managing includes updating, based on the operating condition data obtained at the obtaining, the assignment data assigned to the plural storage virtualization devices.

13. The conversion management method of the storage virtualization system according to any one of claims 8 to 12, further comprising:
creating a routing table specifying a storage virtualization device that can access a predetermined actual memory address of each storage device; and
distributing to the servers or to a predetermined plurality of storage virtualization devices the routing table created at the creating.

14. The conversion management device of the storage virtualization system according to any one of claims 8 to 12, further comprising:
creating a routing table specifying a storage virtualization device that can access a predetermined actual memory address of each storage device; and
distributing to a routing device set up between the servers and the storage Virtualization devices the routing table created at the creating.
